(19) Europäisches Patentamt
European Patent Office
Office européen des brevets

(11) Veröffentlichungsnummer: **0 149 423**
**B1**

(12) # EUROPÄISCHE PATENTSCHRIFT

(45) Veröffentlichungstag der Patentschrift: **28.10.87**

(51) Int. Cl.⁴: **C 07 C 143/75,** D 06 M 16/00

(21) Anmeldenummer: **84810607.6**

(22) Anmeldetag: **10.12.84**

(54) **Verfahren zum Schützen von Keratinmaterial vor dem Befall durch keratinfressende Insekten und neue Phenoxytrifluormethansulfonanilide.**

(30) Priorität: **16.12.83 CH 6711/83**

(43) Veröffentlichungstag der Anmeldung: **24.07.85 Patentblatt 85/30**

(45) Bekanntmachung des Hinweises auf die Patenterteilung: **28.10.87 Patentblatt 87/44**

(84) Benannte Vertragsstaaten: **BE CH DE FR GB IT LI NL**

(56) Entgegenhaltungen:
**DE - A - 2 118 190**
**FR - A - 1 188 591**
**US - A - 3 066 166**
**US - A - 3 856 859**
**US - A - 3 906 024**

(73) Patentinhaber: **CIBA-GEIGY AG, Klybeckstrasse 141, CH-4002 Basel (CH)**

(72) Erfinder: **Böger, Manfred, Wilhelm Glock-Strasse 14, D-7858 Weil am Rhein 5 (DE)**
Erfinder: **Reinehr, Dieter, Dr., Wolfsheule 10, D-7842 Kandern (DE)**
Erfinder: **Schmid, Werner, Keltenweg 40, CH-4125 Riehen (CH)**
Erfinder: **De Sousa, Bernardo, Dr., Paradiesstrasse 15, CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 149 423 B1

**Beschreibung**

Die vorliegende Erfindung betrifft ein Verfahren zum Schützen bzw. Ausrüsten von Keratinmaterial vor bzw. gegen Befall durch keratinfressende Insekten durch Behandlung dieser Materialien mit bestimmten Phenoxytrifluormethansulfonaniliden; ferner neue Phenoxytrifluormethansulfonanilide, Verfahren zu deren Herstellung, diese enthaltende Mittel und deren Verwendung als Motten- und Käferschutzmittel.

Aus der DE-A-890883, DE-A-1058049 und US-A-3066166 sind Chlormethansulfonamide mehrkerniger Amine, u.a. halogenierte Phenoxychlormethansulfonanilide bekannt, die als Schutzmittel gegen Textilschädlinge sowie gegen Schimmel- und Bakterienbefall eingesetzt werden können.

Es wurde überraschenderweise gefunden, dass bestimmte Phenoxytrifluormethansulfonanilide sich besonders gut als Schutzmittel gegen keratinfressende Insekten eignen. Einige dieser Phenoxytrifluormethansulfonanilide sind aus der US-A-3906024, US-A-3856859 und der DE-A-2118190 bekannt. Sie werden dort als herbizid und antiinflammatorisch wirksame Substanzen beschrieben. Der Grossteil der im erfindungsgemässen Verfahren einsetzbaren Phenoxytrifluormethansulfonanilide ist jedoch neu.

Das erfindungsgemässe Verfahren zum Schützen bzw. Ausrüsten von Keratinmaterial bzw. keratinhaltigem Material vor bzw. gegen Befall durch keratinfressende Insekten ist dadurch gekennzeichnet, dass man das zu schützende Material mit Verbindungen der Formel

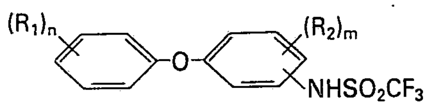

(1)

oder deren Salzen behandelt, worin $R_1$ und $R_2$ unabhängig voneinander jeweils Halogen, Halogenalkyl, Alkyl, Nitro, Cyano, Alkoxy oder Halogenalkoxy, n 0 oder eine Zahl von 1 bis 4 und m 0 oder eine Zahl von 1 bis 3 bedeuten, wobei, wenn n bzw. m >1, die Substituenten $R_1$ bzw. $R_2$ gleich oder verschieden sein können und wobei im Molekül mindestens ein Substituent aus der Gruppe Halogen, Halogenalkyl und Halogenalkoxy enthalten ist.

Weiter betrifft die Erfindung die Verwendung von Verbindungen der Formel (1) als Schutzmittel für Keratinmaterial bzw. keratinhaltiges Material gegen keratinfressende Insekten sowie das mit Hilfe von Verbindungen der Formel (1) geschützte bzw. ausgerüstete Material.

In Formel (1) sind unter Halogen alle Halogenatome zu verstehen, insbesondere Chlor, Brom und Fluor. Bevorzugt ist Chlor. Unsubstituierte und substituierte Alkylgruppen und Alkoxygruppen weisen insbesondere 1 bis 6 C-Atome, vorzugsweise 1 bis 4 C-Atome auf. Halogenalkyl- und alkoxygruppen enthalten vorzugsweise Chlor oder/und Fluor als Halogenatome.

Die Wirkstoffe enthalten im Molekül neben der $-NHSO_2CF_3$-Gruppe mindestens einen Halogen- oder halogenhaltigen Substituenten. In bevorzugten Verbindungen beträgt die Gesamtzahl der Substituenten $R_1 + R_2$ 1–5 (n + m = 1–5), vorzugsweise 2–4 (n + m = 2–4). Sind in einem Phenylkern mehrere Substituenten vorhanden ($R_1$ oder $R_2$), so können diese selbstverständlich gleich oder verschieden sein. Von den Substituenten Halogenalkyl, Nitro, Cyano und Halogenalkoxy sind in den Verbindungen der Formel (1) vorzugsweise höchstens 3, insbesondere höchstens 2 und besonders bevorzugt höchstens einer vorhanden. Die genannten Substituenten treten dabei vorzugsweise als Substituenten $R_1$ auf.

Die Wirkstoffe der Formel (1) können im erfindungsgemässen Verfahren auch in Form ihrer Salze eingesetzt werden. Unter diesen Salzen sind insbesondere die Alkalimetall- und Ammoniumsalze (inklusive substituierte, sich von Aminen ableitende Ammoniumsalze) zu erwähnen. Bevorzugt sind z.B. Natrium-, Kalium- und Ammoniumsalze.

Im erfindungsgemässen Verfahren werden als Verbindungen der Formel (1) vorteilhaft solche eingesetzt, worin für den Fall, dass $R_1$ oder $R_2$ für Trifluormethyl oder Halogen steht, die Summe n + m mindestens 2 beträgt und worin die Summe n + m mindestens 4, wenn $R_1$ und $R_2$ ausschliesslich für Halogenatome, bzw. mindestens 3 beträgt, wenn 2 Substituenten $R_1$ und/oder $R_2$ für Halogen und $NO_2$ stehen.

Insbesondere werden solche Verbindungen der Formel (1) verwendet, worin $R_1$ und $R_2$ unabhängig voneinander Chlor, Fluor, $C_1$–$C_4$-Halogenalkyl, worin Halogen Chlor oder/und Fluor bedeutet, $C_1$–$C_4$-Alkyl, $C_1$–$C_4$-Alkoxy, Nitro oder Cyano bedeuten, vor allem solche, worin mindestens einer der Substituenten $R_1$ oder $R_2$ Chlor oder $C_1$–$C_4$-Halogenalkyl, vorzugsweise Trifluormethyl, bedeutet, wobei vorzugsweise einer der Substituenten $R_1$ für $C_1$–$C_4$-Halogenalkyl, vorzugsweise für Trifluormethyl, steht.

In bevorzugten Verbindungen der Formel (1) beträgt die Summe n + m 1 bis 5, insbesondere 2 bis 4. Ferner sind jene Verbindungen der Formel (1) hervorzuheben, in denen die $NHSO_2CF_3$-Gruppe in 4-Stellung steht, wobei von solchen Verbindungen jene besonders zu erwähnen sind, in denen eine oder beide ortho-Stellung(en) zur $-NHSO_2CF_3$-Gruppe durch $C_1$–$C_4$-Alkyl, vorzugsweise Methyl, besetzt sind.

Praktisch wichtige Verbindungen der Formel (1), die im erfindungsgemässen Verfahren eingesetzt werden können, entsprechen der Formel

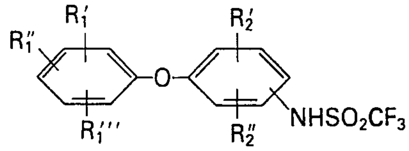 ,

(2)

worin

$R_1'$ Trifluormethyl oder Chlor,

$R_1''$ Wasserstoff, Chlor, Nitro, Cyano oder $C_1$–$C_4$-Alkyl,

$R_1'''$ Wasserstoff oder Chlor,

$R_2'$ Wasserstoff, $C_1$–$C_4$-Akyl oder Chlor und

$R_2''$ Wasserstoff, $C_1$–$C_4$-Alkyl oder Chlor bedeuten,
wobei solche der Formel

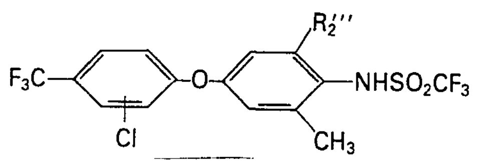

, (3)

worin $R_2'''$ Wasserstoff oder Methyl bedeutet, besonders gute Ergebnisse liefern.

Die im erfindungsgemässen Verfahren zum Schützen von Keratinmaterial gegen keratinfressende Insekten verwendbaren Verbindungen der Formel (1) wirken insbesondere z. B. gegen keratinfressende Larven von Lepidoptera, z. B. Tineola spec. und Tinea spec. sowie gegen keratinfressende Larven von Coleoptera, z. B. Anthrenus spec. und Attagenus spec. Sie eignen sich vorzüglich zum Schützen von keratinischem bzw. keratinhaltigem Material gegen Insektenfrass, insbesondere zur wasch- und lichtechten Ausrüstung gegen Insekten, insbesondere zur Motten- und Käferechtausrüstung von derartigen Materialien. Es kann keratinisches bzw. keratinhaltiges Material sowohl in rohem als auch in verarbeitetem Zustand ausgerüstet werden, z. B. rohe oder verarbeitete Schafwolle, Produkte aus anderen Tierhaaren, Felle, Pelze und Federn.

Praktisch besonders wichtig ist die Wirksamkeit der Verbindungen der Formel (1) gegen die Larven der Kleidermotte (Tineola bisselliella), der Pelzmotte (Tinea pellionella) und der Samenmotte (Hofmannophila pseudopretella) sowie gegen die Larven der Pelz- und Teppichkäfer (Attagenus spec. bzw. Antrenus spec.), z. B. des Wollkraut-Blütenkäfers (Anthrenus verbasci), des Bibernell-Blütenkäfers (Anthrenus pimpinellae), des Gemeinen Teppichkäfers (Anthrenus scrophulariae), des Bebänderten Teppichkäfers (Anthrenus fasciatus), des Gefleckten Pelzkäfers (Attagenus pellio) und vor allem des Dunklen Pelzkäfers (Attagenus piceus) und des Teppichkäfers (Anthrenus flavipes).

Bevorzugt wird das erfindungsgemässe Verfahren einerseits zum Schützen von Textilien aus Wolle, z. B. von Wolldecken, Wollteppichen, Wollwäsche, Wollkleidern und Wirkwaren bzw. wollhaltigen Textilien, wie Mischgeweben, deren eine Komponente Wolle ist, z. B. Mischgewebe aus Wolle und anderen Naturfasern, vorzugsweise Baumwolle oder aus Wolle und Kunstfasern, andererseits auch zum Schützen von Pelzen und Fellen vor dem Befall durch die erwähnten Schädlinge eingesetzt.

Die Verbindungen der Formel (1) werden auf die oben erwähnten Substrate, insbesondere auf wollene und wollhaltige Textilien, vorzugsweise mit Hilfe der aus der Färbereipraxis bekannten Methoden wie Ausziehfärbeverfahren und Foulardapplikationen aufgebracht. Zu diesem Zweck wird eine wässrige Lösung oder Dispersion (bzw. Emulsion oder Suspension) des jeweiligen Wirkstoffes angefertigt. Der Wirkstoff kann vorher in organischen Lösungsmitteln wie aliphatischen und alicyclischen Alkoholen, Ketonen, Kohlenwasserstoffen wie Benzol, Xylolen, Toluol, Bezinen, ferner chlorierten und fluorierten Kohlenwasserstoffen, insbesondere in Propylenglykol, Methoxyäthanol, Äthoxyäthanol oder Dimethylformamid gelöst und anschliessend dem Applikationsbad zugegeben werden, das zusätzliche in der Färbereipraxis übliche Hilfsstoffe, z. B. Dispergatoren, Netzmittel, Säuren, Basen und/oder Farbstoffe enthalten kann, wobei derartige Hilfsstoffe bereits in der organischen Stammformulierung enthalten sein können.

Die Textilmaterialien können z. B. durch heisse oder kalte wässrige Färbe-, Bleich-, Chromierungs- oder Nachbehandlungsbäder mit den Wirkstoffen imprägniert werden, wobei verschiedene Textilausrüstungsverfahren, wie z. B. das Foulard- oder Ausziehverfahren, in Frage kommen.

Die Behandlung erfolgt zweckmässig bei Temperaturen von 10 bis 100 °C, im Färbebad vorzugsweise bei etwa 60–100 °C, im Nachbehandlungs- oder Waschbad bei vorzugsweise 10 bis 70, insbesondere 20 bis 60 °C.

Als zusätzliche Hilfsmittel können den Applikationsflotten z. B. Dispergatoren, Emulgatoren oder Tenside zugegeben werden. Daneben kann die Flotte auch noch übliche Hilfsstoffe, wie wasserlösliche Perborate, Polyphosphate, Carbonate, Silikate, optische Aufheller, Weichmacher, sauer reagierende Salze, wie Ammonium- oder Zinksilikonfluorid, oder gewisse organische Säuren, wie Oxalsäure, Essigsäure oder besonders Ameisensäure, ferner Antimikrobika und Appreturmittel, z. B. solche auf Kunstharzbasis oder Stärke, enthalten. Falls die Motten- und Käferechtausrüstung gemeinsam mit dem Färben des Materials (z. B. Wolle) durchgeführt wird, enthalten die Flotten auch noch die entsprechenden Farbstoffe und gegebenenfalls die dazu erforderlichen Hilfsmittel, z. B. Egalisiermittel.

Wässrige Applikationsflotten können z. B. Tenside, beispielsweise anionaktive Verbindungen, wie Seifen und andere Carboxylate (z. B. Alkalisalze höherer Fettsäuren), Abkömmlinge von Schwefel-Sauerstoffsäuren (z. B. Natriumsalz der Dodecylbenzolsulfonsäure, wasserlösliche Salze von Schwefelsäuremonoestern höhermolekularer Alkohole oder ihrer Polyglykoläther, wie etwa lösliche Salze von Dodecylalkoholsulfat oder von Dodecylalkoholpolyglykoläther-sulfat), Abkömmlinge von Phosphor-Sauerstoffsäuren (z. B. Phosphate), Abkömmlinge mit saurem (elektrophilem) Stickstoff in der hydrophilen Gruppe (z. B. Disulfinsalze), kationaktive Tenside, wie Amine und ihre Salze (z. B. Lauryl-diäthylentriamin), Oniumverbindungen, Aminoxide oder nichtionogene Tenside, wie Polyhydroxyverbindungen, Tenside auf Mono- oder Polysaccharidbasis, höhermolekulare Acetylenglykole, Polyglykoläther (z. B. Polyglykoläther höherer Fettalkohole, Polyglykoläther höhermolekular-alkylierter Phenole) enthalten.

Im Falle von nicht-wässriger Applikation (Lösungsmittelapplikation) kann ein entsprechender Teil einer Verbindung der Formel (1) auch einem geeigneten Lösungsmittel zugegeben werden, und mit der so erhaltenen Lösung kann das zu

schützende Material imprägniert werden. Als Lösungsmittel kommen hierfür unter anderen Trichloräthylen, Methylenchlorid, Kohlenwasserstoffe, Propylenglykol, Methoxyäthanol, Äthoxyäthanol, Dimethylformamid in Frage, denen noch Verteilungsmittel (z. B. Emulgatoren, wie sulfiertes Ricinusöl, Fettalkoholsulfate usw.) und/oder andere Hilfsstoffe zugesetzt werden können. Die zu schützenden Materialien werden üblicherweise mit diesen Lösungen einfach imprägniert.

Die Ausrüstung der zu schützenden Materialien kann aber auch mit einem Trockenreinigungsprozess kombiniert werden. Ein entsprechender Teil einer Verbindung der Formel (1) wird zu diesem Zweck im Reinigungsmittel (etwa niedere halogenierte Alkane, z. B. Trichloräthylen usw.) gelöst, und der Reinigungsprozess wird wie üblich durchgeführt.

Ein Anteil einer Verbindung der Formel (1) kann aber auch in leicht flüchtigen organischen Lösungsmitteln gelöst werden, und diese Lösung kann dann auf das zu schützende Substrat aufgesprüht werden (Sprühapplikation). Für diese Applikationsart eignen sich vor allem wollhaltige Textilien, Pelze und Federn. Der Vorteil der Sprühapplikation besteht darin, dass wegen der Rückgewinnung der Lösungsmittel eine Belastung der Abwässer vermieden wird.

Im erfindungsgemässen Verfahren können die Verbindungen der Formel (1) auch in Kombination mit anderen gegen keratinfressende Insekten wirksamen Schutzmitteln angewendet werden, z. B. in Kombination mit Harnstoffderivaten, Benzimidazolen, aromatischen Sulfonamiden, Phosphor- und Phosphonsäureestern, synthetischen Pyrethroiden und 5-Phenylcarbamoylbarbitursäurederivaten.

Die jeweils eingesetzte Menge an Verbindung der Formel (1), die in das jeweilige Applikationsbad bzw. das nichtwässrige Lösungsmittel eingebracht wird, hängt vom jeweiligen Substrat und der Applikationsmethode ab. Diese Menge wird üblicherweise jedoch so bemessen, dass nach dem Aufziehen auf das jeweils zu schützende Material letzteres etwa 10 bis 2000 ppm, vorzugsweise 100 bis 1000 ppm, an Verbindung der Formel (1) enthält, wobei die obere Grenze weitgehend durch Überlegungen ökonomischer Natur gegeben ist, während die untere Grenze von Kriterien wie angestrebte Breite und Dauerhaftigkeit der Schutzwirkung abhängt. Dies ergibt z. B. für das Ausziehverfahren bei einem Flottenverhältnis von 1:20 Konzentrationen von 0,001 bis 1 g Wirksubstanz/l Behandlungsbad, je nach erreichbarem Ausziehgrad. Beim Foulardverfahren sind Konzentrationen bis 2 g Wirksubstanz pro Liter möglich.

Die Erfindung betrifft insbesondere auch neue Phenoxytrifluormethansulfonanilide der Formel

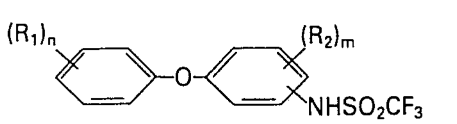
(1a)

und deren Salze, worin $R_1$ und $R_2$ unabhängig voneinander jeweils Halogen, Halogenalkyl, Alkyl, Nitro, Cyano, Alkoxy oder Halogenalkoxy, n 0 oder eine Zahl von 1 bis 4 und m 0 oder eine Zahl von 1 bis 3 bedeuten, wobei, wenn n bzw. m $>1$, die Substituenten $R_1$ bzw. $R_2$ gleich oder verschieden sein können und wobei im Molekül mindestens ein Substituent aus der Gruppe Halogen, Halogenalkyl und Halogenalkoxy enthalten ist, und wobei für den Fall, dass $R_1$ und $R_2$ für Trifluormethyl oder Halogen steht, die Summe n + m mindestens 2 beträgt und wobei die Summe n + m mindestens 4, wenn $R_1$ und $R_2$ ausschiesslich für Halogenatome, bzw. mindestens 3 beträgt, wenn 2 Substituenten $R_1$ und/oder $R_2$ für Halogen und $NO_2$ stehen.

Für die einzelnen Substituenten und die Salze der neuen Verbindungen gelten die im Anschluss an die Formel (1) gegebenen näheren Erklärungen.

Die Verbindungen der Formel (1a) enthalten im Molekül neben der $NHSO_2CF_3$-Gruppe mindestens einen Halogen- oder halogenhaltigen Substituenten. In bevorzugten Verbindungen beträgt die Gesamtzahl der Substituenten $R_1 + R_2$ 1–5 (n + m = 1–5), vorzugsweise 2–4 (n + m = 2–4). Sind in einem Phenylkern mehrere Substituenten vorhanden ($R_1$ oder $R_2$), so können diese selbstverständlich gleich oder verschieden sein. Von den Substituenten Halogenalkyl, Nitro, Cyano und Halogenalkoxy sind in den Verbindungen der Formel (1a) vorzugsweise höchstens 3, insbesondere höchstens 2 und besonders bevorzugt höchstens einer vorhanden. Die genannten Substituenten treten dabei vorzugsweise als Substituenten $R_1$ auf.

Besonders zu erwähnen sind jene Verbindungen der Formel (1a), in denen $R_1$ und $R_2$ unabhängig voneinander Chlor, Fluor, $C_1$–$C_4$-Halogenalkyl, worin Halogen Chlor und/oder Fluor bedeutet, $C_1$–$C_4$-Alkyl, $C_1$–$C_4$-Alkoxy, Nitro oder Cyano bedeuten, vor allem solche, worin mindestens einer der Substituenten $R_1$ oder $R_2$ Chlor oder $C_1$–$C_4$-Halogenalkyl, vorzugsweise Trifluormethyl, bedeutet, wobei vorzugsweise einer der Substituenten $R_1$ für $C_1$–$C_4$-Halogenalkyl, vorzugsweise für Trifluormethyl, steht.

In bevorzugten Verbindungen der Formel (1a) beträgt die Summe n + m 1 bis 5, insbesondere 2 bis 4. Ferner sind jene Verbindungen der Formel (1a) hervorzuheben, in denen die $NHSO_2CF_3$-Gruppe in 4-Stellung steht, wobei von solchen Verbindungen jene besonders zu erwähnen sind, in denen eine oder beide ortho-Stellung(en) zur $-NHSO_2CF_3$-Gruppe durch $C_1$–$C_4$-Alkyl, vorzugsweise Methyl, besetzt sind.

Praktisch besonders wichtig sind Phenoxytrifluormethansulfonanilide der Formel

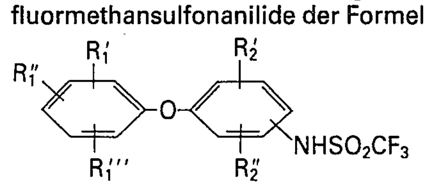
, (2a)

worin

$R_1'$ Trifluormethyl oder Chlor,

$R_1''$ Wasserstoff, Chlor, Nitro, Cyano oder $C_1$–$C_4$-Alkyl,

$R_1'''$ Wasserstoff oder Chlor,

$R_2'$ Wasserstoff, $C_1$–$C_4$-Akyl oder Chlor und
$R_2''$ Wasserstoff, $C_1$–$C_4$-Alkyl oder Chlor bedeuten,

wobei die unter Formel (1a) festgelegten Massgaben bezüglich der Substituentenbedeutungen gelten; Verbindungen der Formel

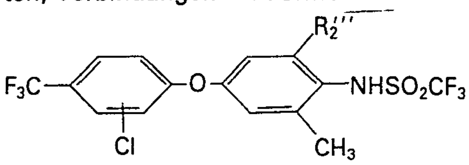
, (3a)

worin $R_2'''$ Wasserstoff oder Methyl bedeutet, zeigen besonders gute Wirkung gegen Keratinschädlinge.

Die im erfindungsgemässen Verfahren einsetzbaren Verbindungen der Formeln (1)–(3) und damit auch die neuen erfindungsgemässen Verbindungen der Formeln (1a)–(3a) können nach an sich bekannten Herstellungsverfahren erhalten werden.

Ein solches Verfahren besteht darin, dass man ein Phenoxyanilin der Formel

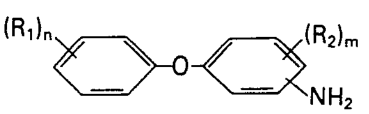
, (4)

worin die allgemeinen Symbole die in Formel (1) angegebene Bedeutung haben, in Gegenwart einer Base mit Trifluormethansulfonsäureanhydrid oder einem Trifluormethansulfonsäurehalogenid umsetzt.

Von den Trifluormethansulfonsäurehalogeniden sind insbesondere Trifluormethansulfonsäurechlorid und -fluorid geeignet. Bevorzugt ist jedoch die Verwendung von Trifluormethansulfonsäureanhydrid.

Die Umsetzung einer Verbindung der Formel (4) mit Trifluormethansulfonsäurehalogenid oder -anhydrid wird zweckmässigerweise in Gegenwart einer Stickstoffbase, beispielsweise einem tertiären Amin, wie Pyridin, Triäthylamin oder N,N-Dimethylanilin durchgeführt.

Die Umsetzung kann in Anwesenheit von reaktionsinerten Lösungs- oder Verdünnungsmitteln durchgeführt werden. In Frage kommen beispielsweise aliphatische und aromatische Kohlenwasserstoffe, wie Cyclohexan, Petroläther, Benzol, Toluol und Xylole; halogenierte Kohlenwasserstoffe, wie Methylenchlorid, Äthylenchlorid, Dichlormethan, Trichlormethan, Chloroform, Tetrachlorkohlenstoff, Tetrachloräthylen und Chlorbenzol; Äther und ätherartige Verbindungen, wie Anisol, Dioxan, Tetrahydrofuran, 1,2-Dimethoxyäthan und Dialkyläther, wie Diäthyläther, Diisopropyläther und tert.-Butylmethyläther; Nitrile, wie Acetonitril und Propionitril; N,N-dialkylierte Amide, wie Dimethylformamid und Dimethylacetamid; Dimethylsulfoxid; Ketone, wie Aceton, Diäthylketon und Methyläthylketon; und Gemische solcher Lösungsmittel untereinander.

Die Reaktionstemperaturen liegen zweckmässigerweise zwischen −15 und +150 °C, bevorzugt zwischen −5 und 120 °C.

Nach einem weiteren Verfahren können die Verbindungen der Formel (1) hergestellt werden, indem man ein Phenolat der Formel

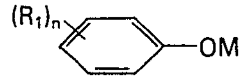
, (5)

worin M ein Alkalimetall- oder Kupferatom bedeutet und $R_1$ und n wie in Formel (1) definiert sind, in einem Lösungsmittel mit einem Trifluormethansulfonanilid der Formel

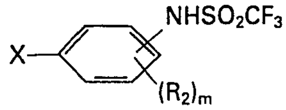
(6)

umsetzt, worin X für ein Halogenatom steht und $R_2$ und m wie in Formel (1) definiert sind.

Beispiele für bevorzugte Lösungsmittel in diesem Verfahren sind Pyridin, Chinolin, Dimethylformamid und dergleichen. Wenn X Chlor ist, ist einer der Substituenten $R_1$ vorzugsweise eine aktivierende Gruppe, beispielsweise $NO_2$. Bevorzugt wird ein Katalysator verwendet, insbesondere CuCl. Die Alkalimetallsalze (M = Alkalimetallatom) können als solche eingesetzt oder können in situ gebildet werden, z. B. durch Zugabe eines Alkalimetallhydroxids oder -alkoholates. Die Reaktionstemperatur kann je nach der Reaktionsfähigkeit der Ausgangsstoffe in weiten Grenzen variieren, ebenso wie die Reaktionszeiten. Im allgemeinen arbeitet man bei Teperaturen im Bereich von 0 bis 200 °C.

Die in den beiden vorstehend beschriebenen Verfahren einzusetzenden Ausgangsverbindungen der Formeln (4) bis (6) sowie die Trifluormethansulfonhalogenide und -anhydride sind bekannt oder können nach an sich bekannten Verfahren erhalten werden. So kann beispielsweise zur Herstellung von Verbindungen der Formel (4) so vorgegangen werden, dass man eine Verbindung der Formel

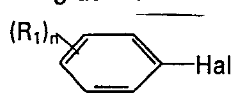
, (7)

worin $R_1$ und n wie in Formel (1) definiert sind und Hal für ein Halogenatom, vorzugsweise für Fluor und insbesondere für Chlor steht, mit einer Verbindung der Formel

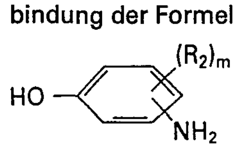
(8)

umsetzt, worin $R_2$ und m wie in Formel (1) definiert sind.

Die Umsetzung von Verbindungen der Formel (7) mit Verbindungen der Formel (8) wird zweckmässigerweise in Gegenwart einer anorganischen oder organischen Base durchgeführt. Beispiele für anorganische Basen sind die Oxide, Hydride, Carbonate und Hydrogencarbonate von Alkali- und Erdalkalimetallen, wie Natriumhydroxyd und Natriumhydrid, für organische Basen vor allem tertiäre Amine wie Triäthylamin, Pyridin und Triäthylendiamin.

Die Umsetzung kann in Gegenwart eines reaktionsinerten Lösungs- oder Verdünnungsmittels durchgeführt werden, beispielsweise in Gegenwart eines der vorstehend für die erste Herstellungsmethode von Verbindungen der Formel (1) angeführten Medien. Die Reaktionstemperaturen liegen zweckmässigerweise zwischen 0 und 200 °C, bevorzugt zwischen 0 und 150 °C.

Die Ausgangsprodukte der Formeln (7) und (8) sind bekannt oder lassen sich analog bekannten Methoden herstellen.

Die vorstehend beschriebene Umsetzung von Verbindungen der Formeln (7) und (8) kann auch direkt zur Herstellung von Verbindungen der Formel (1) verwendet werden, wenn man anstelle einer Verbindung der Formel (8) eine solche der Formel

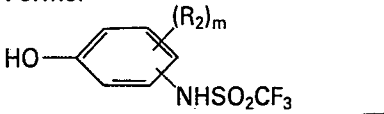

(9)

einsetzt. Die Reaktionsparameter sind wie vorstehend beschrieben.

Verbindungen der Formel (4) können alternativ auch durch Reduktion der entsprechenden Nitroverbindungen hergestellt werden. Es können dazu übliche Reduktionsmethoden verwendet werden, wie z. B. Eisen (Béchamp-Reduktion), Natriumsulfid und insbesondere katalytische Reduktion mit $H_2$ (Katalysator, z. B. Raney-Nickel). Die genannten Nitroverbindungen sind bekannt oder können ebenfalls nach bekannten Verfahren hergestellt werden, z. B. nach dem Schema

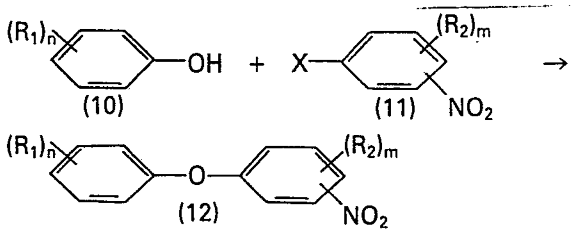

(10) (11) (12)

worin X Chlor, Brom oder Jod bedeutet und die übrigen allgemeinen Symbole wie in Anspruch 1 definiert sind.

Obwohl die Umsetzung in Gegenwart einer Base durchgeführt werden kann, die als Beschleuniger und Säureakzeptor wirkt, wird sie vorzugsweise durch eine Vorreaktion der Verbindung der Formel (10) mit einer Base unter Bildung eines Salzes durchgeführt, wobei die Salze von anorganischen Basen bevorzugt werden. Es ist bekannt, dass solche Salze leicht hergestellt werden, und zwar können sie in situ hergestellt oder isoliert werden. Am meisten werden die Salze von Alkalimetallen, wie z. B. von Natrium und Kalium, oder die Kupfersalze bevorzugt. Wenn Alkalimetallsalze verwendet werden, sind Dimethylformamid und Pyridin die bevorzugten Lösungsmittel. Wenn $R_2$ ein elektronenspendender Substituent, wie z. B. Alkyl oder Alkoxy, in der 2- oder 4-Stellung zur Nitrogruppe ist, ist Pyridin das bevorzugte Lösungsmittel, und es wird zweckmässig eine Spur Kupfer-I-chlorid als Katalysator verwendet. Kupfer-I-salze oder ein Kupfer-I-chloridkatalysator und Pyridin als Lösungsmittel werden zur Herstellung von 3-Phenoxynitrobenzolen bevorzugt. Es ist vorteilhaft, wenn X Brom oder Jod ist.

Die Verbindungen der Formel (1) bzw. (1a) sind sauer (saures H-Atom an der substituierten Aminogruppe). Wie bereits erwähnt, bilden sie daher Salze, die ebenfalls Gegenstand der Erfindung sind bzw. die ebenfalls im erfindungsgemässen Verfahren eingesetzt werden können. Diese Salze sind im allgemeinen Metall-, Ammonium- oder organische Aminsalze (substituierte Ammoniumsalze) und können durch Behandeln der sauren Form mit einer stöchiometrisch äquivalenten Menge einer geeigneten Base unter milden Bedingungen hergestellt werden. Zu den Metallsalzen gemäss der Erfindung gehören Alkalimetall- (z. B. Lithium-, Natrium- und Kalium-), Erdalkalimetall- (z. B. Barium, Calcium- und Magnesium-) und Schwermetallsalze (z. B. Zink- und Eisensalze) sowie auch andere Metallsalze, wie z. B. Aluminiumsalze. Zu geeigneten Basen, die zur Herstellung der Metallsalze verwendet werden können, gehören Metalloxide, -hydroxide, -carbonate, -bicarbonate und -alkoxide. Einige Salze werden auch durch Kationenaustauschreaktionen (durch Umsetzung eines Salzes gemäss der Erfindung mit einem organischen oder anorganischen Salz nach einer Kationenaustauschreaktion) hergestellt. Zu den organischen Aminsalzen gehören die Salze von aliphatischen (z. B. Alkyl-), aromatischen und heterocyclischen Aminen sowie auch solche mit einer Mischung dieser Strukturarten. Die zur Herstellung der Salze gemäss der Erfindung geeigneten Amine können primär, sekundär oder tertiär sein und enthalten vorzugsweise nicht mehr als 20 Kohlenstoffatome. Zu solchen Aminen gehören z. B. Morpholin, Methylcyclohexylamin und dergleichen. Diese Amine und die Ammoniumsalze können durch Umsetzung der sauren Form mit der geeigneten organischen Base oder mit Ammoniumhydroxid hergestellt werden. Geeignete Salze sind im allgemeinen die Alkalimetall-, Ammonium- und Aminsalze.

Die Salze gemäss der Erfindung werden auch häufig durch Umsetzung der Ausgangsverbindungen in wässrigen Lösungen hergestellt. Diese Lösung kann eingedampft werden, um so das Salz der Verbindung, im allgemeinen in Form eines trockenen Pulvers, zu ergeben.

In einigen Fällen kann es einfacher sein, ein nicht-wässriges Lösungsmittel, wie z. B. Alkohole, Acetone usw., zu verwenden. Die erhaltene Lösung wird dann zur Entfernung des Lösungsmittels entsprechend behandelt, z. B. unter vermindertem Druck eingedampft. Weil viele der Salze wasserlöslich sind, werden sie häufig in der Form der wässrigen Lösungen verwendet.

Verbindungen der Formel (1) bzw. (1a) (z. B. erhalten nach einem der vorstehend beschriebenen Verfahren) können durch geeignete an sich bekannte Reaktionen auch in andere Verbindungen der Formel (1) bzw. (1a) umgewandelt werden.

So können z. B. Verbindungen der Formel (1) bzw. (1a) zur Einführung von Substituenten $R_1$ bzw. $R_2$ halogenisiert (vorzugsweise chloriert) oder nitriert werden. Diese Verfahren können nach bekannten Nitrier- und Halogenierungs (Chlorierungs-)verfahren von Aromaten durchgeführt werden. Die Herstellung bzw. Verwandlung von Salzen ist bereits erörtert worden.

Die nachfolgenden Beispiele erläutern das erfindungsgemässe Verfahren sowie die Herstellung der darin verwendeten Wirkstoffe der Formel (1) bzw. der neuen Verbindungen der Formel (1a) näher. Es wird jedoch betont, dass die Erfindung nicht auf diese Beispiele beschränkt ist.

In den nachfolgenden Beispielen, ebenso wie in der gesamten übrigen Beschreibung und in den Patentansprüchen, bedeuten Teile- und Prozentangaben Gewichtsteile und Gewichtsprozent, sofern nichts anderes angegeben ist. Schmelzpunkte sind unkorrigiert.

Beispiel 1

In eine gekühlte Mischung (ca. 0 °C) von 12,6 g 2,6-Dimethyl-4-(2-chlor-4-trifluormethylphenoxy)-anilin und 6,0 g N,N-Diäthylanilin in 70 ml Trichlormethan wird bei 0 bis 5 °C eine Lösung von 11,3 g Trifluormethansulfonsäureanhydrid in 15 ml Trichlormethan innerhalb 20 Minuten unter Rühren zugetropft. Die Reaktionsmischung wird anschliessend 2 Stunden bei Raumtemperatur gerührt, dann 1 Stunde auf 50 °C erhitzt und wieder abgekühlt. Danach wird mehrmals mit 2 N Natronlauge extrahiert. Die vereinigten alkalischen Phasen werden mit konzentrierter Salzsäure auf pH 1 gestellt und mit Dichlormethan extrahiert. Die Dichlormethanphase wird mit Wasser neutral gewaschen, über Natriumsulfat getrocknet und eingeengt. Der feste Rückstand wird aus Hexan umkristallisiert, und man erhält so 2,6-Dimethyl-4-(2-chlor-4-trifluormethylphenoxy)-trifluormethansulfonanilid der Formel

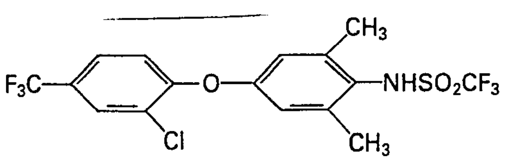
(101)

als weisses kristallines Produkt mit einem Fp. von 114–115 °C.

Verfährt man analog der vorstehenden Herstellungsvorschrift, so erhält man unter Verwendung der entsprechenden Ausgangsprodukte die in der nachfolgenden Tabelle zusammengefassten Phenoxytrifluormethansulfonanilide der Formel

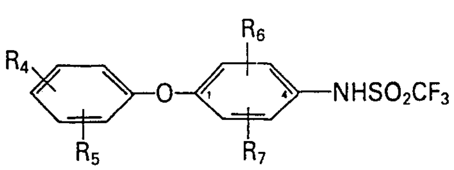
(A)

Tabelle

| Verbindung Nr. | $R_4$ | $R_5$ | $R_6$ | $R_7$ | Fp (°C) | Kp (°C/Torr) |
|---|---|---|---|---|---|---|
| 102 | 4-$CF_3$ | H | 3-$CH_3$ | 5-$CH_3$ | 107–108 | |
| 103 | 4-Cl | H | 3-$CH_3$ | 5-$CH_3$ | 94– 95 | |
| 104 | 4-$CF_3$ | 2-Cl | 3-$CH_3$ | 5-$CH_3$ | 114–115 | |
| 105 | 3-$CF_3$ | H | 3-$CH_3$ | 5-$CH_3$ | 75– 77 | |
| 106 | 3-Cl | 4-Cl | 3-$CH_3$ | 5-$CH_3$ | 115–117 | |
| 107 | 4-$CF_3$ | 2-CN | 3-$CH_3$ | 5-$CH_3$ | 138–140 | |
| 108 | 4-$CF_3$ | 2-CN | 3-$CH_3$ | H | 160–162 | |
| 109 | 4-$CF_3$ | 2-Cl | H | H | | 132/0,1 |
| 110 | 4-$CF_3$ | 2-Cl | 3-$CH_3$ | H | | 140/0,1 |
| 111 | 4-$CF_3$ | H | H | H | | 98/0,1 |
| 112 | 2-$CF_3$ | H | H | H | | 138/0,1 |
| 113 | 4-$CF_3$ | 2-$NO_2$ | H | H | | zähflüssiges Öl |

In analoger Weise werden auch die substituierten Phenoxytrifluormethansulfonanilide der folgenden Formeln erhalten:

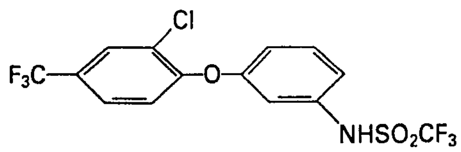
(114)

farbloses Öl, Kp. 135 °C/0,1 Torr,

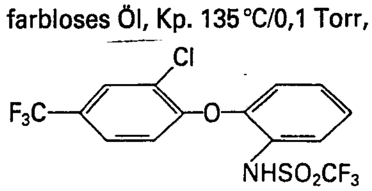
(115)

gelbliches Öl, Kp. 120 °C/0,2 Torr und

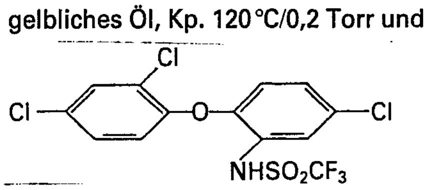
(116)

braunes Öl.

Beispiel 2

In einem 100-ml-Sulfierkolben mit Gaseinleitung werden 8,1 g der Verbindung der Formel (116), 50 ml o-Dichlorbenzol und 0,1 g Jod bei Raumtemperatur vorgelegt. In die erhaltene braune Lösung wird innerhalb von 4 Stunden 15,8 g Chlorgas eingeleitet, wobei die Temperatur maximal 40 °C beträgt. Bei etwa 40 °C wird noch weitere 3 Stunden und anschliessend bei Raumtemperatur über Nacht gerührt. Die Reaktionsmischung wird am Rotationsverdampfer bei 60 °C im Hochvakuum eingedampft. Man erhält so ein braunes Öl, das sich gemäss Analyse als ein Gemisch der Formel

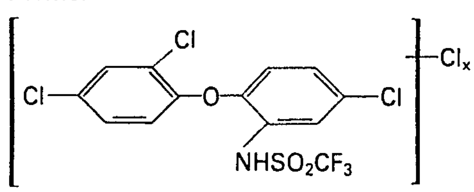
(117)

erweist, wobei x einen Wert von etwa 2 bis 3 hat. Die Stellung der durch die Chlorierung eingeführten Chloratome ist unbestimmt.

Beispiel 3

Das im Herstellungsverfahren gemäss Beispiel 1 benötigte Ausgangsmaterial 2,6-Dimethyl-4-(2-chlor-4-trifluormethylphenoxy)-anilin kann wie folgt erhalten werden:

In einem mit Stickstoff gespülten Sulfierkolben werden 27,4 g 3,5-Dimethyl-4-aminophenol, 12,4 g 90%ige KOH, 200 ml Dimethylsulfoxid und 100 ml Toluol vorgelegt. Um das durch die KOH eingebrachte Wasser zu entfernen, wird die Mischung auf Rückflusstemperatur erhitzt und das Wasser 4 Stunden lang azeotrop abgeschieden. Dann wird das restliche Toluol abdestilliert. Unter Einleitung von Stickstoff werden bei 120 °C 43 g 3,4-Dichlorbenzotrifluorid in 40 ml Dimethysulfoxid zugetropft, und die Reaktionsmischung wird 8 Stunden bei dieser Temperatur gerührt. Danach wird der pH-Wert mit Essigsäure auf 7,0 eingestellt und die Mischung am Rotationsverdampfer bei 60 °C eingedampft. Der Rückstand wird mit 300 ml Toluol und 200 ml Wasser aufgenommen und ½ Stunde bei Raumtemperatur gerührt und die Lösung filtiert. Die Toluolphase wird zweimal mit je 100 ml Toluol gewaschen, getrocknet, filtriert und am Rotationsverdampfer eingedampft. Der Rückstand wird in Dichlormethan gelöst, eingedampft, mit Hexan versetzt und die ausgefallenen Kristalle werden abgenutscht und getrocknet. Das erhaltene Produkt wird destilliert (Kp = 144–148 °C/0,08 Torr) und nochmals mit Methylenchlorid/Hexan umkristallisiert. Man erhält so 2,6-Dimethyl-4-(2-chlor-4-trifluormethylphenoxy)anilin mit einem Fp. von 104–105 °C.

Beispiel 4

Von der Verbindung der Formel (101) wird eine 0,4%ige Stammlösung in Äthylenglykolmonomethyläther bereitet. Dann wird bei Zimmertemperatur eine wässrige Applikationsflotte hergestellt, die in 120 ml destilliertem Wasser 0,12 ml eines Netz- und Dispergiermittels, 0,6 ml Ameisensäure 1:10 und 0,75 ml der 0,4%igen Stammlösung enthält. Dann werden 3 g Wollflanell-Gewebe mit heissem Wasser durchnetzt und bei Zimmertemperatur eingegeben. Unter ständigem Umziehen des Wollmusters wird die Badtemperatur innerhalb 20 Minuten auf 98 °C erhöht und 60 Minuten bei 98 °C gehalten. Dann wird abgekühlt, die Wollmuster werden zweimal 3 Minuten mit destilliertem Wasser gespült, von Hand abgequetscht und an der Luft getrocknet. Die Wirkstoffkonzentration beträgt 1000 ppm, berechnet auf das Wollgewicht.

Das so getrocknete Muster wird der Mottenechtheitsprüfung (Frassschutz gegen die Kleidermotte Tineola bisselliella Hum.) gemäss der Vorschrift des schweizerischen Normenverbandes SNV 195901 sowie der Echtheitsprüfung gegen Larven des Pelzkäfers (Attagenus piceus Ol.) und Teppichkäfers (Anthrenus flavipes.) gemäss SNV 195902 unterworfen.

Es werden jeweils Larven von Anthrenus flavipes und 6 bis 7 Wochen alte Larven von Attagenus piceus zur Prüfung verwendet. Aus dem behandelten Wollflanellmuster werden Stücke gleicher Grösse ausgeschnitten und 14 Tage lang bei konstanter Temperatur (28 °C) und konstanter relativer Luftfeuchtigkeit (65%) dem Angriff (Frass) von je 15 Larven des entsprechenden Schädlings ausgesetzt. Die Beurteilung erfolgt einerseits nach dem relativen Gewichtsverlust des Prüflings und andererseits nach der Anzahl noch lebender Organismen.

Die geprüfte Verbindung zeigt eine ausgezeichnete Wirkung gegen alle 3 verwendeten Schädlinge.

Verwendet man anstelle der Verbindung der Formel (101) eine der Verbindungen der Formeln (102) bis (117) und verfährt ansonsten wie vorstehend beschrieben, so kommt man ebenfalls zu Wollmustern, die ausgezeichnet gegen die 3 geprüften Schädlinge geschützt sind.

Beispiel 5

Von der Verbindung der Formel (101) wird eine 0,4%ige Stammlösung in Äthylenglykolmonomethyläther bereitet. 12,5 ml der Stammlösung werden mit Äthylenglykolmonomethyläther, welcher 0,65 g/l eines Netz- und Dispergiermittels enthält, auf 50 ml verdünnt (= Lösung Nr. 1). 25 ml der Lösung Nr. 1 werden mit Äthylenglykolmonomethyläther, welcher 0,65 g/l eines Netz- und Dispergiermittels enthält, auf 50 ml verdünnt (= Lösung Nr. 2). 25 ml der Lösung Nr. 2 werden erneut mit Äthylenglykolmonomethyläther, welcher 0,5 g/l eines Netz- und Dispergiermittels enthält, auf 50 ml verdünnt (= Lösung Nr. 3).

Von den Lösungen Nr. 1, 2 und 3 werden je 3 ml in Kristallisierschalen geleert und je eine geköderte Rondelle aus Wollflanell 3 Sekunden darin benetzt. Die feuchten Rondellen werden anschliessend zwischen Aluminiumfolien foulardiert, und zwar derart, dass die abgequetschten Rondellen je 50% Flotte aufgenommen haben. Die Konzentration an Wirkstoff auf den Rondellen beträgt dann der Reihe nach 500 ppm, 250 ppm und 125 ppm.

Die feuchten Rondellen werden an der Luft getrocknet und den gleichen biologischen Prüfungen unterworfen wie in Beispiel 4 beschrieben.

Die geprüfte Verbindung zeigt eine ausgezeichnete Wirkung gegen alle 3 Schädlinge.

Verwendet man anstelle der Verbindung der Formel (101) eine der Verbindungen der Formeln (102) bis (117) und verfährt ansonsten wie vorstehend beschrieben, so kommt man ebenfalls zu Wollmustern, die ausgezeichnet gegen die 3 geprüften Schädlinge geschützt sind.

Beispiel 6

Es wird eine 10%ige Lösung der Verbindung der Formel (101) in Äthylenglykolmonomethyläther hergestellt. Ein Volumenteil dieser Lösung wird mit 200 Volumenteilen eines zur Trockenreinigung geeigneten Lösungsmittels, z. B. einer passenden Bezinfraktion oder Perchloräthylen, verdünnt. Gewünschtenfalls können noch reinigungsfördernde

Zusätze beigefügt werden. Wollartikel werden nun wie üblich in dieser Reinigungsflüssigkeit behandelt und anschliessend auf einen Lösungsmittelgehalt von ca. 100% des Wollgewichtes abgeschleudert. Sie sind nach dem Trocknen hervorragend gegen die oben genannten keratinfressenden Schädlinge geschützt.

Beispiel 7

Es wird eine 0,5%ige Lösung der Verbindung der Formel (101) in Methylenchlorid, Trichloräthylen oder einer tiefsiedenden Benzinfraktion angesetzt. Ein Wollartikel wird mit Hilfe einer üblichen Sprüheinrichtung mit dieser Lösung besprüht, so dass $2 \times 15\,g/m^2$ an Wirkstofflösung appliziert werden. Bei einem Ausnützungseffekt des Aerosols von 30% befinden sich dann etwa 400 ppm der Verbindung der Formel (101) auf dem Material. Das so ausgerüstete Wollgewebe ist gegen die oben genannten keratinfressenden Schädlinge geschützt.

Verwendet man in den Beispielen 6 und 7 anstelle der Verbindung der Formel (101) eine der Verbindungen der Formeln (102) bis (117) und verfährt ansonsten wie in den beiden Beispielen beschrieben, so erhält man ebenfalls Wollgewebe, das gegen die oben genannten Keratinschädlinge geschützt ist.

Beispiel 8

Färbung und gleichzeitige Motten- und Käferechtausrüstung:

Auf einem Färbeapparat wird ein Stück Wollgewebe in 600 g einer Färbeflotte, die aus

0,15 g der Verbindung der Formel (101),
30,3 g Glaubersalz,
24,0 g Schwefelsäure konz.,
3,0 g eines roten Farbstoffes der Formel

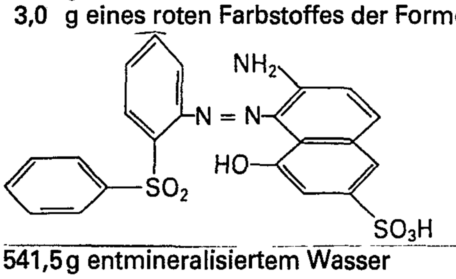

und

541,5 g entmineralisiertem Wasser

besteht, während 5 Minuten bei 40 °C vorgenetzt (Flottenverhältnis 1:20). Die Flotte wird anschliessend innerhalb 45 Minuten auf ca. 98 °C erhitzt. Nach einer einstündigen Behandlungsdauer bei dieser Temperatur wird das Wollgewebe gespült und getrocknet. Der Farbstoff und die Verbindung der Formel (101) sind auf das Gewebe aufgezogen. Das rotgefärbte Wollgewebe ist nach dieser einbadigen Behandlung vollständig gegen Motten- und Käferlarvenfrass geschützt. Dies wird durch Echtheitsprüfung gemäss SNV-Norm 195901 und 195902 festgestellt.

Beispiel 9

Anwendung im Nachbehandlungsbad:

Auf einem Färbeapparat wird ein Stück Wollgewebe in 400 g einer Nachbehandlungsflotte, die aus

0,1 g der Verbindung der Formel (101),
4 g Ameisensäure 85% und
395 g entmineralisiertem Wasser

besteht, während 5 Minuten bei 30 °C vorgenetzt (Flottenverhältnis 1:20). Die Flotte wird dann innerhalb von 20 Minuten auf 45 °C erwärmt. Nach einer 30 Minuten dauernden Behandlung bei dieser Temperatur, wobei das Wollgewebe unter ständiger Bewegung gehalten wird, wird letzteres in kaltem Wasser gut gespült und getrocknet. Das so behandelte Wollgewebe ist gegen die Larven von Wollschädlingen vollständig geschützt.

Ersetzt man in den beiden vorstehenden Beispielen 8 und 9 die Verbindung der Formel (101) jeweils durch eine der Verbindungen der Formeln (102) bis (117), so erhält man ebenfalls gut gegen Wollschädlinge geschütztes Gewebe.

**Patentansprüche**

1. Verfahren zum Schützen bzw. Ausrüsten von Keratinmaterial bzw. keratinhaltigem Material vor bzw. gegen Befall durch keratinfressende Insekten, dadurch gekennzeichnet, dass man das zu schützende Material mit Verbindungen der Formel

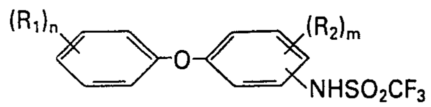

(1)

oder deren Salzen behandelt, worin $R_1$ und $R_2$ unabhängig voneinander jeweils Halogen, Halogenalkyl, Alkyl, Nitro, Cyano, Alkoxy oder Halogenalkoxy, n 0 oder eine Zahl von 1 bis 4 und m 0 oder eine Zahl von 1 bis 3 bedeuten, wobei, wenn n bzw. m >1, die Substituenten $R_1$ bzw. $R_2$ gleich oder verschieden sein können und wobei im Molekül mindestens ein Substituent aus der Gruppe Halogen, Halogenalkyl und Halogenalkoxy enthalten ist.

2. Verfahren nach Anspruch 1, dadurch gekennzeichnet, dass man eine Verbindung der Formel (1) einsetzt, worin $R_1$ und $R_2$ unabhängig voneinander Chlor, Fluor, $C_1$–$C_4$-Halogenalkyl, worin Halogen Chlor oder/und Fluor bedeutet, $C_1$–$C_4$-Alkyl, $C_1$–$C_4$-Alkoxy, Nitro oder Cyano bedeuten.

3. Verfahren nach Anspruch 1, dadurch gekennzeichnet, dass man eine Verbindung der Formel (1) einsetzt, worin für den Fall, dass $R_1$ oder $R_2$ für Trifluormethyl oder Halogen steht, die Summe n + m mindestens 2 beträgt und worin die Summe n + m mindestens 4, wenn $R_1$ und $R_2$ ausschliesslich für Halogenatome bzw. mindestens 3 beträgt, wenn 2 Substituenten $R_1$ und/oder $R_2$ für Halogen und $NO_2$ stehen.

4. Verfahren nach einem der Ansprüche 1 bis 3, dadurch gekennzeichnet, dass man eine Verbindung der Formel (1) einsetzt, worin die Summe n + m 1 bis 5, vorzugsweise 2 bis 4 beträgt.

5. Verfahren nach einem der Ansprüche 1 bis 4, dadurch gekennzeichnet, dass man eine Verbindung der Formel (1) einsetzt, worin mindestens einer der Substituenten $R_1$ oder $R_2$ Chlor oder $C_1$–$C_4$-Halogenalkyl, vorzugsweise Trifluormethyl, bedeutet.

6. Verfahren nach Anspruch 5, dadurch gekennzeichnet, dass man eine Verbindung der Formel (1) einsetzt, worin einer der Substituenten $R_1$ $C_1$–$C_4$-Halogenalkyl, vorzugsweise Trifluormethyl, bedeutet.

7. Verfahren nach einem der Ansprüche 1–6, dadurch gekennzeichnet, dass man eine Verbindung der Formel (1) einsetzt, worin die $-NHSO_2CF_3$-Gruppe in 4-Stellung steht.

8. Verfahren nach Anspruch 7, dadurch gekennzeichnet, dass man eine Verbindung der Formel (1) einsetzt, worin eine oder beide ortho-Stellungen zur $-NHSO_2CF_3$-Gruppe durch $C_1$–$C_4$-Alkyl, vorzugsweise Methyl, besetzt sind.

9.Verfahren nach Anspruch 1, dadurch gekennzeichnet, dass man eine Verbindung der Formel

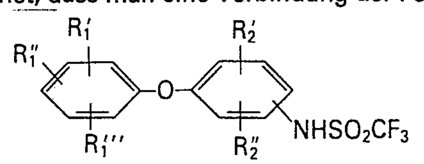 ,

einsetzt, worin

$R_1'$ Trifluormethyl oder Chlor,

$R_1''$ Wasserstoff, Chlor, Nitro, Cyano oder $C_1$–$C_4$-Alkyl,

$R_1'''$ Wasserstoff oder Chlor,

$R_2'$ Wasserstoff, $C_1$–$C_4$-Akyl oder Chlor und

$R_2''$ Wasserstoff, $C_1$–$C_4$-Alkyl oder Chlor bedeuten.

10. Verfahren nach Anspruch 9, dadurch gekennzeichnet, dass man eine Verbindung der Formel

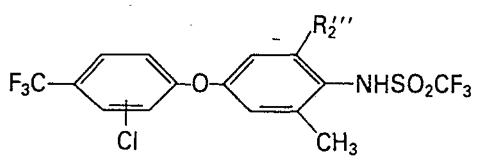 ,

einsetzt, worin $R_2'''$ Wasserstoff oder Methyl bedeutet.

11. Verfahren nach Anspruch 1, dadurch gekennzeichnet, dass man das zu schützende Material, insbesondere wollfaserhaltige Textilien, mit einer wässrigen Flotte, die eine oder mehrere in Anspruch 1 definierte Verbindungen enthält, behandelt, beispielsweise nach dem Ausziehverfahren oder dem Foulardverfahren, wobei die wässrige Flotte gegebenenfalls noch übliche Textilhilfsmittel, wie z. B. Dispergatoren, Netzmittel, Säuren, Basen und/oder Farbstoffe enthalten kann.

12. Verfahren nach Anspruch 1, dadurch gekennzeichnet, dass man das zu schützende Material mit einer organischen Reinigungsflüssigkeit behandelt, die eine oder mehrere in Anspruch 1 definierte Verbindungen enthält.

13. Verfahren nach Anspruch 1, dadurch gekennzeichnet, dass man das zu schützende Material mit einem organischen Lösungsmittel besprüht, das eine oder mehrere in Anspruch 1 definierte Verbindungen enthält.

14. Verfahren nach einem der Ansprüche 1 oder 11 bis 13, dadurch gekennzeichnet, dass man auf die zu schützenden Materialien die Wirkstoffverbindungen in einer Menge von 10 bis 2000 ppm, vorzugsweise 100 bis 1000 ppm, bezogen auf das zu schützende Material, aufbringt.

15. Verfahren nach Anspruch 11 oder 14, dadurch gekennzeichnet, dass man Wolltextilien im Färbebad nach dem Ausziehverfahren behandelt.

16. Verfahren nach Anspruch 11 oder 14, dadurch gekennzeichnet, dass man Wolltextilien im Nachbehandlungsbad nach dem Ausziehverfahren behandelt.

17. Das nach einem der Ansprüche 1 bis 16 ausgerüstete Keratinmaterial.

18. Keratinmaterial nach Anspruch 17, vorzugsweise wollhaltige Textilien, Pelze und Felle, enthaltend 10 bis 2000 ppm, vorzugsweise 100 bis 1000 ppm, an Verbindungen der Formel (1).

19. Verwendung der in den Ansprüchen 1 bis 10 definierten Verbindungen zum Schützen von Keratinmaterial, insbesondere von Wolltextilien, gegen den Befall durch Keratinschädlinge.

20. Phenoxytrifluormethansulfonanilide der Formel

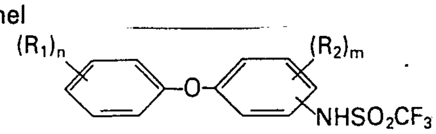

oder deren Salze, worin $R_1$ und $R_2$ unabhängig voneinander jeweils Halogen, Halogenalkyl, Alkyl, Nitro, Cyano, Alkoxy oder Halogenalkoxy, n 0 oder eine Zahl von 1 bis 4 und m 0 oder eine Zahl von 1 bis 3 bedeuten, wobei, wenn n bzw. m >1, die Substituenten $R_1$ bzw. $R_2$ gleich oder verschieden sein können und wobei im Molekül mindestens ein Substituent aus der Gruppe Halogen, Halogenalkyl und Halogenalkoxy enthalten ist, und wobei für den Fall, dass $R_1$ oder $R_2$ für Trifluormethyl oder Halogen steht, die Summe n + m mindestens 2 beträgt und wobei die Summe n + m mindestens 4, wenn $R_1$ und $R_2$ ausschliesslich für Halogenatome, bzw. mindestens 3 beträgt, wenn 2 Substituenten $R_1$ und/oder $R_2$ für Halogen und $NO_2$ stehen.

21. Phenoxytrifluormethansulfonanilide nach Anspruch 20, worin $R_1$ und $R_2$ unabhängig voneinander Chlor, Fluor, $C_1$–$C_4$-Halogenalkyl, worin Halogen Chlor oder/und Fluor bedeutet, $C_1$–$C_4$-Alkyl, $C_1$–$C_4$-Alkoxy, Nitro oder Cyano bedeuten.

22. Phenoxytrifluormethansulfonanilide nach Anspruch 20 oder 21, worin die Summe n + m 1 bis 5, vorzugsweise 2 bis 4 beträgt.

23. Phenoxytrifluormethansulfonanilide nach einem der Ansprüche 20 bis 22, worin mindestens einer der Substituenten $R_1$ oder $R_2$ Chlor oder $C_1$–$C_4$-Halgenalkyl, vorzugsweise Trifluormethyl, bedeutet.

24. Phenoxytrifluormethansulfonanilide nach Anspruch 23, worin einer der Substituenten $R_1$ $C_1$–$C_4$-Halogenalkyl, vorzugsweise Trifluormethyl, bedeutet.

25. Phenoxytrifluormethansulfonanilide nach einem der Ansprüche 20 bis 24, worin die $-NHSO_2CF_3$-Gruppe in 4-Stellung steht.

26. Phenoxytrifluormethansulfonanilide nach Anspruch 25, worin eine oder beide ortho-Stellungen zur $-NHSO_2CF_3$-Gruppe durch $C_1$–$C_4$-Alkyl, vorzugsweise Methyl, besetzt sind.

27. Phenoxytrifluormethansulfonanilide nach Anspruch 20 der Formel

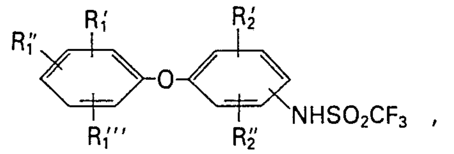

worin
$R_1'$ Trifluormethyl oder Chlor,
$R_1''$ Wasserstoff, Chlor, Nitro, Cyano oder $C_1$–$C_4$-Alkyl,
$R_1'''$ Wasserstoff oder Chlor,
$R_2'$ Wasserstoff, $C_1$–$C_4$-Akyl oder Chlor und
$R_2''$ Wasserstoff, $C_1$–$C_4$-Alkyl oder Chlor bedeuten.
wobei die in Anspruch 20 festgelegten Einschränkungen bezüglich Substituentenbedeutungen gelten.

28. Phenoxytrifluormethansulfonanilide nach Anspruch 27 der Formel

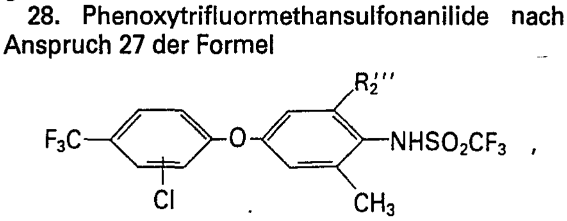

worin $R_2'''$ Wasserstoff oder Methyl bedeutet.

29. Verfahren zur Herstellung von Phenoxytrifluormethansulfonaniliden der in Anspruch 20 definierten Formel, dadurch gekennzeichnet, dass man ein Phenoxyanilin der Formel

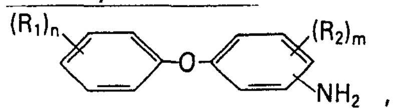

worin die allgemeinen Symbole die in Anspruch 20 angegebene Bedeutung haben, in Gegenwart einer Base mit Trifluormethansulfonsäureanhydrid oder einem Trifluormethansulfonsäurehalogenid umsetzt.

30. Verfahren zur Herstellung von Phenoxytrifluormethansulfonaniliden der in Anspruch 20 definierten Formel, dadurch gekennzeichnet, dass man ein Phenolat der Formel

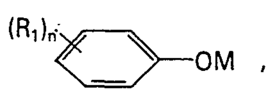

worin M ein Alkalimetall- oder Kupferatom bedeutet und $R_1$ und n wie in Anspruch 20 definiert sind, in einem Lösungsmittel mit einem Trifluormethansulfonanilid der Formel

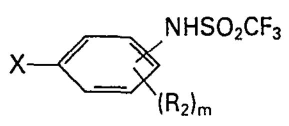

umsetzt, worin X für ein Halogenatom steht und $R_2$ und m wie in Anspruch 20 definiert sind.

31. Mittel zum Schützen bzw. Ausrüsten von Keratinmaterial bzw. keratinhaltigem Material gegen den Befall durch Keratinschädlinge, das ein oder mehrere in Anspruch 20 definierte Phenoxytrifluormethansulfonanilide enthält.

32. Mittel nach Anspruch 31, das neben dem Wirkstoff noch übliche Träger und/oder Formulierungshilfsmittel, beispielsweise organische Lösungsmittel, Wasser, Säuren, Basen, Netz-, Dispergier- und/oder Emulgiermittel enthält.

**Claims**

1. A process for protecting or finishing keratinous material or keratin-containing material against attack by insects that feed on keratin, which process comprises treating the material to be protected with compounds of the formula

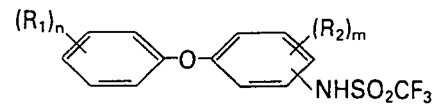
(1)

wherein $R_1$ and $R_2$, each independently of the other, are halogen, haloalkyl, alkyl, nitro, cyano, alkoxy or haloalkoxy, n is 0 or a value from 1 to 4 and m is 0 or a value from 1 to 3, with the proviso that if n or m >1, the substituents $R_1$ and $R_2$ may be identical or different, and that at least one substituent selected from the group consisting of halogen, haloalkyl and haloalkoxy is present in the molecule, or salts thereof.

2. A process according to claim 1, which comprises using a compound of formula (1), wherein each of $R_1$ and $R_2$ independently of the other is chlorine, fluorine, $C_1$–$C_4$haloalkyl, wherein halogen is chlorine and/or fluorine, or is $C_1$–$C_4$-alkyl, $C_1$–$C_4$alkoxy, nitro or cyano.

3. A process according to claim 1, which comprises using a compound of formula (1) wherein the sum of n + m is at least 2 if $R_1$ or $R_2$ is trifluoromethyl or halogen, or the sum of n + m is at least 4 if $R_1$ and $R_2$ are exclusively halogen atoms, or is at least 3 if 2 substituents $R_1$ and/or $R_2$ are halogen and $NO_2$.

4. A process according to any one of claims 1 to 3, which comprises using a compound of formula (1), wherein the sum of n + m is 1 to 5, preferably 2 to 4.

5. A process according to any one of claims 1 to 4, which comprises using a compound of formula (1), wherein at least one of the substituents $R_1$ or $R_2$ is chlorine or $C_1$–$C_4$haloalkyl, preferably trifluoromethyl.

6. A process according to claim 5, which comprises using a compound of formula (1), wherein one of the substituents $R_1$ is $C_1$–$C_4$haloalkyl, preferably trifluoromethyl.

7. A process according to any one of claims 1 to 6, which comprises using a compound of formula (1), wherein the $-NHSO_2CF_3$ group is in the 4-position.

8. A process according to claim 7, which process comprises using a compound of formula (1) which carries $C_1$–$C_4$alkyl, preferably methyl, in one or both orthopositions relative to the $-NHSO_2CF_3$ group.

9. A process according to claim 1, which process comprises using a compound of the formula

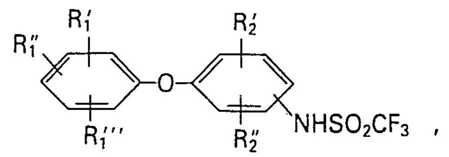

wherein

$R_1'$ is trifluoromethyl or chlorine,

$R_1''$ is hydrogen, chlorine, nitro, cyano or $C_1$–$C_4$alkyl,

$R_1'''$ is hydrogen or chlorine,

$R_2'$ is hydrogen, $C_1$–$C_4$alkyl or chlorine and

$R_2''$ is hydrogen, $C_1$–$C_4$alkyl or chlorine.

10. A process according to claim 9, which process comprises using a compound of the formula

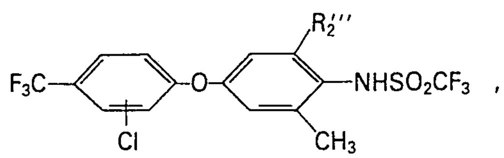

wherein $R_2'''$ is hydrogen or methyl.

11. A process according to claim 1, which process comprises treating the material to be protected, in particular wool-containing textiles, with an aqueous liquor containing one or more of the compounds defined in claim 1, for example by the exhaust or pad process, which aqueous liquor may also contain conventional textile assistants such as dispersants, wetting agents, acids, bases and/or dyes.

12. A process according to claim 1, which comprises treating the material to be protected with an organic cleaning liquid containing one or more of the compounds defined in claim 1.

13. A process according to claim 1, which comprises spraying the material to be protected with an organic solvent containing one or more of the compounds defined in claim 1.

14. A process according to any one of claims 1 or 11 to 13, which comprises applying to the materials to be protected the active compounds in an amount of 10 to 2000 ppm, preferably 100 to 1000 ppm, based on the material to be protected.

15. A process according to claim 11 or 14, which comprises treating woollen textiles in the dye bath by the exhaust process.

16. A process according to claim 11 or 14, which comprises treating woollen textiles in the aftertreatment bath by the exhaust process.

17. The keratinous material finished according to any one of claims 1 to 16.

18. The keratinous material according to claim 17, preferably wool-containing textiles, furs and skins, which contain 10 to 2000 ppm, preferably 100 to 1000 ppm, of compounds of formula (1).

19. Use of the compounds defined in claims 1 to 10 for protecting keratinous material, in particular woollen textiles, from attack by keratin pests.

20. Phenoxytrifluoromethanesulfonanilides of the formula

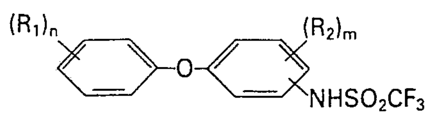

wherein $R_1$ and $R_2$, each independently of the other, are halogen, haloalkyl, alkyl, nitro, cyano, alkoxy or haloalkoxy, n is 0 or a value from 1 to 4 and m is 0 or a value from 1 to 3, with the proviso that if n or m $>1$, the substituents $R_1$ and $R_2$ may be identical or different, and that at least one substituent selected from the group consisting of halogen, haloalkyl and haloalkoxy is present in the molecule, and the sum of n + m is at least 2 if $R_1$ or $R_2$ is trifluoromethyl or halogen, or the sum of n + m is at least 4 if $R_1$ and $R_2$ are exclusively halogen atoms, or is at least 3 if 2 substituents $R_1$ and/or $R_2$ are halogen and $NO_2$, or salts thereof.

21. Phenoxytrifluoromethanesulfonanilides according to claim 2, wherein each of $R_1$ and $R_2$ independently of the other is chlorine, fluorine, $C_1$–$C_4$haloalkyl, wherein halogen is chlorine and/or fluorine, or is $C_1$–$C_4$alkyl, $C_1$–$C_4$alkoxy, nitro or cyano.

22. Phenoxytrifluoromethanesulfonanilides according to claim 20 or 21, wherein the sum of n + m is 1 to 5, preferably 2 to 4.

23. Phenoxytrifluoromethanesulfonanilides according to any one of claims 20 to 22, wherein at least one of the substituents $R_1$ or $R_2$ is chlorine or $C_1$–$C_4$haloalkyl, preferably trifluoromethyl.

24. Phenoxytrifluoromethanesulfonanilides according to claim 23, wherein one of the substituents $R_1$ is $C_1$–$C_4$haloalkyl, preferably trifluoromethyl.

25. Phenoxytrifluoromethanesulfonanilides according to any one of claims 20 to 24, wherein the $-NHSO_2CF_3$ group is in the 4-position.

26. Phenoxytrifluoromethanesulfonanilides according to claim 25, which carries $C_1$–$C_4$alkyl, preferably methyl, in one or both ortho-positions relative to the $-NHSO_2CF_3$ group.

27. Phenoxytrifluoromethanesulfonanilides according to claim 20 of the formula

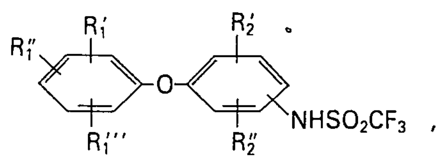

wherein

$R_1'$ is trifluoromethyl or chlorine,

$R_1''$ is hydrogen, chlorine, nitro, cyano or $C_1$–$C_4$alkyl,

$R_1'''$ is hydrogen or chlorine,

$R_2'$ is hydrogen, $C_1$–$C_4$alkyl or chlorine and

$R_2''$ is hydrogen, $C_1$–$C_4$alkyl or chlorine,

with the restrictions stated in claim 20 with regard to the meaning of the substituents applying.

28. Phenoxytrifluoromethanesulfonanilides according to claim 27 of the formula

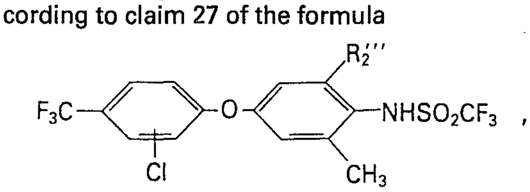

wherein $R_2'''$ is hydrogen or methyl.

29. A process for the preparation of a phenoxytrifluoromethanesulfonanilides of the formula as

defined in claim 20, which process comprises reacting a phenoxyaniline of the formula

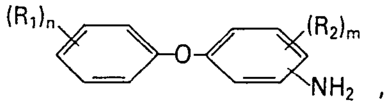
,

wherein the general symbols have the meanings given in claim 20, with trifluoromethanesulfonic anhydride or with a trifluoromethanesulfonyl halide in the presence of a base.

30. A process for the preparation of phenoxytrifluorosulfonanilides of the formula as defined in claim 20, which comprises reacting a phenolate of the formula

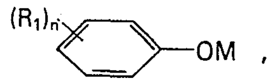
,

wherein M is an alkali metal atom or a copper atom and R 1 and n are as defined in claim 20, with a trifluoromethanesulfonanilide of the formula

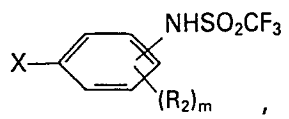
,

wherein X is a halogen atom and $R_2$ and m are as defined in claim 20, in a solvent.

31. A composition for protecting or finishing keratinous material or keratin-containing material against attack by keratin pests, said composition containing one or more of the phenoxytrifluoromethanesulfonanilides as defined in claim 20.

32. A composition according to claim 31, which, in addition to the active ingredient, contains conventional carriers and/or formulation assistants, for example organic solvents, water, acids, bases, wetting agents, dispersants and/or emulsifiers.

**Revendications**

1. Procédé pour la protection ou l'apprêtage de matériau kératinique ou de matériau contenant de la kératine, avant ou contre l'attaque d'insectes se nourrissant de kératine, caractérisé par le fait que l'on traite le matériau à protéger avec des composés de formule

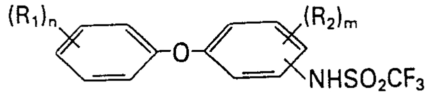
(1)

ou des sels de ceux-ci, dans laquelle formule $R_1$ et $R_2$ représentent chacun, indépendamment l'un de l'autre, un atome d'halogène ou un groupe halogénoalkyle, alkyle, nitro, cyano, alcoxy ou halogénoalcoxy, n est 0 ou un nombre allant de 1 à 4 et m est 0 ou un nombre allant de 1 à 3, les substituants $R_1$ ou respectivement $R_2$, lorsque n ou respectivement m est >1, pouvant être identiques ou différents, et au moins un substituant choisi parmi des atomes d'halogène et des groupes halogénoalkyle et halogénoalcoxy étant contenu dans la molécule.

2. Procédé selon la revendication 1, caractérisé par le fait que l'on utilise un composé de formule (1) dans lequel $R_1$ et $R_2$ représentent, indépendamment l'un de l'autre, des atomes de chlore ou de fluor ou des groupes halogénoalkyle en $C_1$–$C_4$, halogéno signifiant chloro et/ou fluoro, alkyle en $C_1$–$C_4$, alcoxy en $C_1$–$C_4$, nitro ou cyano.

3. Procédé selon la revendication 1, caractérisé par le fait que l'on utilise un composé de formule (1) dans lequel, au cas où $R_1$ ou $R_2$ représente un atome d'halogène ou le groupe trifluorométhyle, la somme n + m s'élève au moins à 2, et dans lequel la somme n + m s'élève au moins à 4 lorsque $R_1$ et $R_2$ représentent exclusivement des atomes d'halogène, ou respectivement au moins à 3, lorsque deux substituants $R_1$ et/ou $R_2$ représentent un atome d'halogène et $NO_2$.

4. Procédé selon l'une des revendications 1 à 3, caractérisé par le fait que l'on utilise un composé de formule (1) dans lequel la somme n + m va de 1 à 5, de préférence de 2 à 4.

5. Procédé selon l'une des revendications 1 à 4, caractérisé par le fait que l'on utilise un composé de formule (1) dans lequel au moins un des substituants $R_1$ ou $R_2$ représente un atome de chlore ou un groupe halogénoalkyle en $C_1$–$C_4$, de préférence le groupe trifluorométhyle.

6. Procédé selon la revendication 5, caractérisé par le fait que l'on utilise un composé de formule (1) dans lequel un des substituants $R_1$ représente un groupe halogénoalkyle en $C_1$–$C_4$, de préférence le groupe trifluorométhyle.

7. Procédé selon l'une des revendications 1 à 6, caractérisé par le fait que l'on utilise un composé de formule (1) dans lequel le groupe $-NHSO_2CF_3$ est en position 4.

8. Procédé selon la revendication 7, caractérisé par le fait que l'on utilise un composé de formule (1) dans lequel une position ortho ou les deux, par rapport au groupe $-NHSO_2CF_3$, sont occupées par un groupe alkyle en $C_1$–$C_4$, de préférence le groupe méthyle.

9. Procédé selon la revendication 1, caractérisé par le fait que l'on utilise un composé de formule

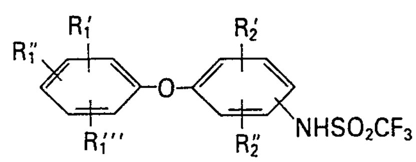
,

dans laquelle

$R_1'$ représente le groupe trifluorométhyle ou un atome de chlore,

$R_1''$ représente un atome d'hydrogène ou de chlore, ou un groupe nitro, cyano ou alkyle en $C_1$–$C_4$,

$R_1'''$ représente un atome d'hydrogène ou de chlore,

$R_2'$ représente un atome d'hydrogène ou de chlore, ou un groupe alkyle en $C_1$–$C_4$, et

$R_2''$ représente un atome d'hydrogène ou de chlore, ou un groupe alkyle en $C_1$–$C_4$.

10. Procédé selon la revendication 9, caractérisé par le fait que l'on utilise un composé de formule

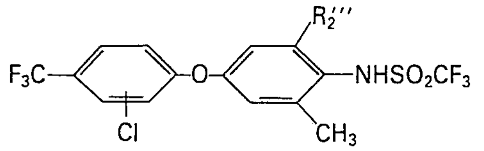

,

dans laquelle $R_2'''$ représente un atome d'hydrogène ou le groupe méthyle.

11. Procédé selon la revendication 1, caractérisé par le fait que l'on traite le matériau à protéger, en particulier des textiles contenant des fibres de laine, par exemple selon le procédé par épuisement ou le procédé de foulardage, avec un bain aqueux qui contient un ou plusieurs composés définis dans la revendication 1, le bain aqueux pouvant éventuellement contenir encore des agents auxiliaires usuels pour textiles, tels que par exemple dispersants, agents mouillants, acides, bases et/ou colorants.

12. Procédé selon la revendication 1, caractérisé par le fait que l'on traite le matériau à protéger avec un liquide organique de nettoyage qui contient un ou plusieurs composés définis dans la revendication 1.

13. Procédé selon la revendication 1, caractérisé par le fait que l'on asperge le matériau à protéger avec un solvant organique qui contient un ou plusieurs composés définis dans la revendication 1.

14. Procédé selon l'une des revendications 1 ou 11 à 13, caractérisé par le fait que l'on applique sur les matériaux à protéger les composés actifs, en une quantité de 10 à 2000 ppm, de préférence 100 à 1000 ppm, par rapport au matériau à protéger.

15. Procédé selon la revendication 11 ou 14, caractérisé par le fait que l'on traite des textiles de laine, selon le procédé par épuisement, dans le bain de teinture.

16. Procédé selon la revendication 11 ou 14, caractérisé par le fait que l'on traite des textiles de laine, selon le procédé par épuisement, dans le bain de post-traitement.

17. Le matériau kératinique apprêté selon l'une des revendications 1 à 16.

18. Matériaux kératiniques selon la revendication 17, de préférence textiles contenant de la laine, fourrures et peaux, qui contiennent de 10 à 2000 ppm, de préférence 100 à 1000 ppm de composés de formule (1).

19. Utilisation des composés définis dans les revendications 1 à 10, pour la protection de matériaux kératiniques, en particulier de textiles de laine, contre l'attaque de parasites de la kératine.

20. Phénoxytrifluorométhanesulfonanilides de formule

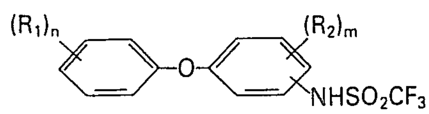

et sels de ceux-ci, dans laquelle formule $R_1$ et $R_2$ représentent chacun, indépendamment l'un de l'autre, un atome d'halogène ou un groupe halogénoalkyle, alkyle, nitro, cyano, alcoxy ou halogénoalcoxy, n est 0 ou un nombre allant de 1 à 4 et m est 0 ou un nombre allant de 1 à 3, les substituants $R_1$ ou respectivement $R_2$, lorsque n ou respectivement m est >1, pouvant être identiques ou différents, et au moins un substituant choisi parmi des atomes d'halogène et des groupes halogénoalkyle et halogénoalcoxy étant contenu dans la molécule, et la somme n + m s'élevant au moins à 2 dans le cas où $R_1$ ou $R_2$ représente un atome d'halogène ou le groupe trifluorométhyle, et la somme n + m s'élevant au moins à 4 lorsque $R_1$ et $R_2$ représentent exclusivement des atomes d'halogène, ou respectivement au moins à 3 lorsque deux substituants $R_1$ et/ou $R_2$ représentent un atome d'halogène et $NO_2$.

21. Phénoxytrifluorométhanesulfonanilides selon la revendication 20, dans lesquels $R_1$ et $R_2$ représentent, indépendamment l'un de l'autre, un atome de fluor ou de chlore, ou un groupe halogénoalkyle en $C_1$–$C_4$, «halogéno» signifiant chloro et/ou fluoro, alkyle en $C_1$–$C_4$, alcoxy en $C_1$–$C_4$, nitro ou cyano.

22. Phénoxytrifluorométhanesulfonanilides selon la revendication 20 ou 21, dans lesquels la somme m + n va de 1 à 5, de préférence de 2 à 4.

23. Phénoxytrifluorométhanesulfonanilides selon l'une des revendications 20 à 22, dans lesquels au moins un des substituants $R_1$ ou $R_2$ représente un atome de chlore ou un groupe halogénoalkyle en $C_1$–$C_4$, de préférence le groupe trifluorométhyle.

24. Phénoxytrifluorométhanesulfonanilides selon la revendication 23, dans lesquels un des substituants $R_1$ représente un groupe halogénoalkyle en $C_1$–$C_4$, de préférence le groupe trifluorométhyle.

25. Phénoxytrifluorométhanesulfonanilides selon l'une des revendications 20 à 24, dans lesquels le groupe $-NHSO_2CF_3$ est en position 4.

26. Phénoxytrifluorométhanesulfonanilides selon la revendication 25, dans lesquels une position ortho ou les deux, par rapport au groupe $-NHSO_2CF_3$, sont occupées par un groupe alkyle en $C_1$–$C_4$, de préférence le groupe méthyle.

27. Phénoxytrifluorométhanesulfonanilides selon la revendication 20, de formule

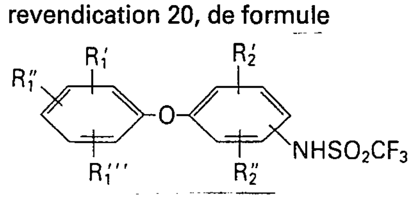

,

dans laquelle

- $R_1'$ représente le groupe trifluorométhyle ou un atome de chlore,
- $R_1''$ représente un atome d'hydrogène ou de chlore, ou un groupe nitro, cyano ou alkyle en $C_1$–$C_4$,
- $R_1'''$ représente un atome d'hydrogène ou de chlore,
- $R_2'$ représente un atome d'hydrogène ou de chlore, ou un groupe alkyle en $C_1$–$C_4$, et
- $R_2''$ représente un atome d'hydrogène ou de chlore, ou un groupe alkyle en $C_1$–$C_4$,

les restrictions, établies dans la revendication 20, en ce qui concerne les significations des substituants, étant valables.

28. Phénoxytrifluorométhanesulfonanilides selon la revendication 27, de formule

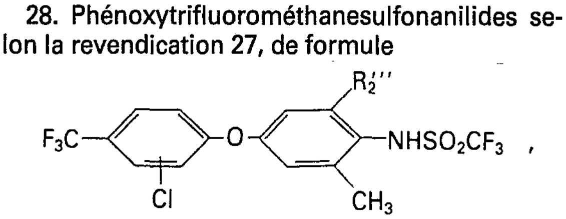

dans laquelle $R_2'''$ représente un atome d'hydrogène ou le groupe méthyle.

29. Procédé pour la préparation de phénoxytrifluorométhanesulfonanilides de formule définie dans la revendication 20, caractérisé par le fait que l'on fait réagir une phénoxyaniline de formule

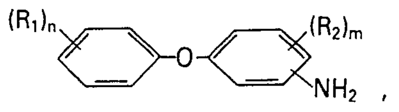

dans laquelle les symboles généraux ont les significations données dans la revendication 20, avec de l'anhydride trifluorométhanesulfonique ou un halogénure de trifluorométhanesulfonyle, en présence d'une base.

30. Procédé pour la préparation de phénoxytrifluorométhanesulfonanilides de formule définie dans la revendication 20, caractérisé par le fait que l'on fait réagir un phénolate de formule

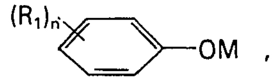

dans lequel M représente un atome de cuivre ou d'un métal alcalin, et $R_1$ et n sont tels que définis dans la revendication 20, dans un solvant, avec un trifluorométhanesulfonanilide de formule

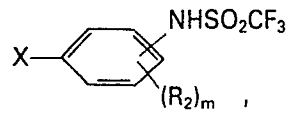

dans laquelle X représente un atome d'halogène, et $R_2$ et m sont tels que définis dans la revendication 20.

31. Produit pour la protection ou l'apprêtage de matériau kératinique ou de matériau contenant de la kératine, contre l'attaque de parasites de la kératine, lequel contient un ou plusieurs phénoxytrifluorométhanesulfonanilides définis dans la revendication 20.

32. Produit selon la revendication 31, qui en plus du composant actif, contient également des supports usuels et/ou auxiliaires usuels de formulation, par exemple solvants organiques, eau, acides, bases, agents mouillants, dispersants et/ou émulsifiants.